# FASCICULE DE BREVET EUROPEEN

(11) **EP 0 639 499 B1**
(45) Date de publication et mention de la délivrance du brevet: **29.12.1997**
(21) Numéro de dépôt: 94401876.1
(22) Date de dépôt: 19.08.1994
(51) Int. Cl.: B64C 13/42, F15B 20/00

(54) **Dispositif de servocommande d'un organe de commande de vol d'aéronef**
Servosteuerungvorrichtung eines Steuerwerkes eines Flugzeuges
Servo control device of an aircraft flight control member

(30) Priorité: 20.08.1993 FR 9310166
(43) Date de publication de la demande: 22.02.1995
(73) Titulaire: LUCAS FRANCE, F-75008 Paris (FR)
(72) Inventeur: Thoraval, Bruno, F-95740 Frepillon (FR); Bertrand, Jean-Luc, F-92000 Nanterre (FR)
(74) Mandataire: Martin, Jean-Jacques

(56) Documents cités:
- EP-A- 0 068 728
- EP-A- 0 256 648
- GB-A- 2 149 940

## Description

La présente invention est relative à un dispositif de servocommande pour le contrôle de la position d'un organe de commande de vol d'aéronef.

Un tel organe de commande de vol est par exemple une pale de rotor d'hélicoptère dont le dispositif de servocommande contrôle l'orientation en pas par basculement et coulissement du plateau cyclique inférieur dudit rotor par rapport à l'axe de celui-ci.

On utilise en aéronautique, depuis de nombreuses années, des commandes de vol électriques. En particulier, sur certains avions tels que l'Airbus A 320, les ordres de pilotage sont transmis de la cabine de pilotage jusqu'à un calculateur qui actionne électriquement des servovannes. Chacune de ces servovannes commande un circuit hydraulique qui actionne un vérin de déplacement auquel est mécaniquement relié l'un des organes de commande de vol (volet ou gouverne) à orienter.

Pour assurer la sécurité de la commande et éviter qu'une panne d'un circuit électrique n'entraîne une panne complète de l'organe dont l'orientation est commandée, une solution consiste à commander le circuit hydraulique du vérin de déplacement relié à cet organe, par quatre circuits électriques commandant quatre déplacements mécaniques. Des moyens mécaniques intégrés au circuit hydraulique permettent de transmettre au vérin un mouvement qui est une moyenne de ces quatre déplacements.

En cas de défaillance de l'un des circuits de commande, les trois autres circuits de commande maintiennent l'orientation de l'organe de commande de vol.

Avec ce principe, l'appareil peut faire face à trois défaillances successives des circuits de commande.

Cette solution est néanmoins mécaniquement très complexe.

Un but principal de l'invention est de proposer un dispositif de servocommande pour organe de commande de vol d'aéronef d'une plus grande simplicité, et présentant une sécurité équivalente.

Il a déjà été envisagé de réaliser des dispositifs de servocommande comportant plusieurs circuits de commande dont un seul à la fois est activé pour commander le déplacement de l'organe de commande de vol, les autres circuits étant des circuits de réserve.

Lorsqu'une défaillance du premier circuit de commande est détectée, l'un des circuits de réserve prend le relais du premier circuit.

Néanmoins, à ce jour, aucune solution n'a été proposée qui permette un basculement à la fois fiable et rapide d'un circuit de commande à un autre.

L'invention propose quant à elle un dispositif de servocommande pour l'actionnement d'un organe de commande de vol d'un aéronef, comportant au moins un vérin hydraulique monté entre cet organe et une autre partie de l'aéronef, ainsi que des moyens d'actionnement de ce vérin, ce vérin hydraulique étant un vérin double, ces moyens d'actionnement comportant un premier ensemble d'actionnement comprenant deux circuits hydrauliques commandés chacun par une vanne de distribution à commande mécanique, ces deux vannes de distribution étant actionnées par des éléments mécaniques communs entraînés en mouvement par des moyens moteurs, les moyens d'actionnement comportant des moyens de gestion commandant ces moyens moteurs en fonction de la position de l'organe de commande de vol et des ordres de pilotage qu'elle reçoit, caractérisé en ce qu'il comporte un deuxième ensemble d'actionnement du type précité dont les vannes de distribution sont actionnées en même temps que celles du premier ensemble et de façon similaire à celles-ci, et en ce qu'il comporte également des moyens pour la détection de la défaillance d'au moins un élément de l'un ou l'autre desdits premier et deuxième ensembles d'actionnement, ainsi qu'une vanne de sélection, présentant deux états, cette vanne mettant sélectivement en communication les circuits hydrauliques du premier et du deuxième ensembles d'actionnement avec ceux du vérin, de sorte que dans un premier état de la vanne de sélection, le premier ensemble d'actionnement est actif et commande le vérin, le deuxième ensemble d'actionnement étant en réserve, et que dans un deuxième état de la vanne de sélection, les premier et deuxième ensembles d'actionnement sont respectivement en réserve et actif, le passage de ladite vanne de sélection de l'un de ses états à l'autre étant commandé par les moyens de gestion en fonction de la (ou des) défaillance(s) relevée(s) par les moyens de détection.

Avantageusement, le premier et le deuxième ensembles d'actionnement comportent chacun deux unités motrices susceptibles d'entraîner les éléments mécaniques communs actionnant leurs vannes de distribution, les deux unités motrices d'un même ensemble d'actionnement étant en fonctionnement, l'une opérationnelle, l'autre passive, les moyens de gestion commandant, simultanément à la commande du passage de la vanne de sélection d'un de ses états à un autre, le passage à l'état passif de l'unité motrice opérationnelle de celui des ensembles d'actionnement qui était actif et devient en réserve, ainsi que le passage de l'autre unité motrice de cet ensemble d'actionnement de l'état passif à l'état opérationnel.

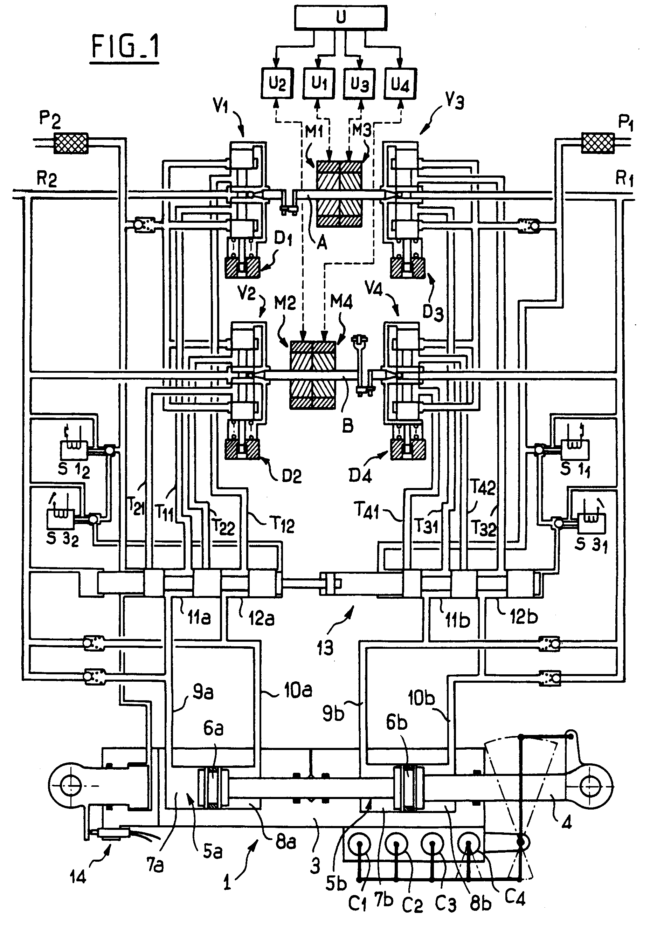

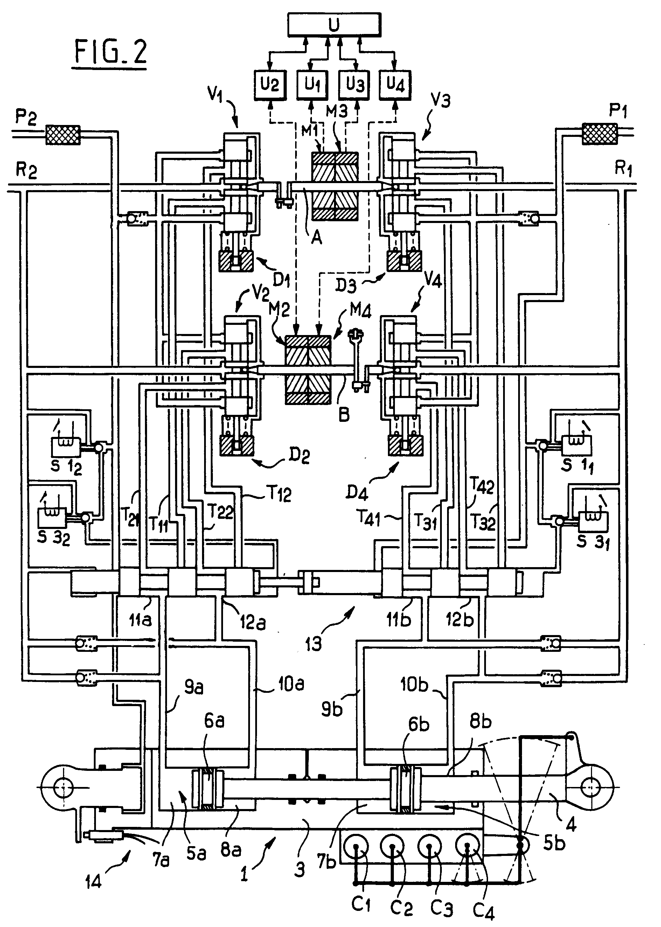

D'autres caractéristiques et avantages de l'invention ressortiront encore de la description qui suit d'un mode de réalisation particulier. Cette description est purement illustrative et non limitative. Elle doit être lue en regard des dessins annexés sur lesquels :
. la figure 1 est une représentation schématique du dispositif de servocommande selon l'invention, dans un mode opératoire de celui-ci
. la figure 2 est une représentation schématique du dispositif de servocommande de la figure 1, dans un autre mode opératoire.

Le dispositif de servocommande, représenté sur ces figures, comporte principalement un vérin hydraulique 1 et des moyens pour l'actionnement de ce vérin hydraulique 1. Le vérin hydraulique 1 est par exemple l'un des vérins reliés au plateau cyclique inférieur d'un rotor d'hélicoptère, ces vérins commandant l'orientation en pas des pales du rotor par coulissement et basculement du plateau cyclique inférieur par rapport à l'axe du rotor.

Ce vérin 1 comporte principalement un corps 3 de forme généralement cylindrique, dans lequel coulisse axialement une tige 4. A son extrémité sortie du corps 3, la tige 4 est reliée à une bielle (non représentée) qui la relie au plateau cyclique inférieur, le corps étant relié, par son extrémité opposée, à une partie de l'hélicoptère fixe par rapport au fuselage de celui-ci.

Le corps 3 présente axialement deux chambres hydrauliques cylindriques référencées par 5a et 5b, dans lesquelles coulissent respectivement des pistons 6a et 6b portés par la tige 4. Ces pistons 6a et 6b définissent dans chacune des chambres 5a et 5b deux compartiments référencés respectivement par 7a, 8a et 7b, 8b. Dans chacun de ces compartiments 7a, 8a, 7b, 8b débouche un canal d'alimentation/évacuation en fluide hydraulique, référencé respectivement 9a, 10a, 9b, 10b.

Ces canaux 9a, 10a, 9b, 10b débouchent chacun dans un compartiment, référencé respectivement par 11a, 12a, 11b, 12b, d'une vanne de sélection 13.

Cette vanne de sélection 13 est une vanne de type tiroir. Elle permet, selon le positionnement de sa tige intérieure, de mettre en communication les canaux 9a, 10a, 9b, 10b, soit respectivement avec des canaux T11, T12, T31, T32 (Figure 1), soit respectivement avec des canaux T21, T22, T41, T42 (Figure 2). Les canaux T11 et T12 forment un couple de canaux de commande d'alimentation/évacuation pour le déplacement du piston 6a dans la chambre 5a. Il en est de même du couple de canaux T21 et T22. Les canaux T31 et T32, d'une part, et, T41 et T42, d'autre part, forment quant à eux des couples de canaux de commande d'alimentation/évacuation pour le déplacement du piston 6b.

Chaque tel couple de canaux d'alimentation/évacuation est à cet effet relié à une vanne de commande référencée respectivement de V1 à V4. Ces vannes V1 à V4 sont des vannes tiroir du type distributeur proportionnel et sont commandées chacune par un moteur électrique rotatif référencé respectivement par M1, M2, M3 ou M4.

Les moteurs M1 et M3 présentent un arbre commun A qui est couplé à chacune de ses extrémités à des moyens du type bielle/manivelle permettant de transformer son mouvement rotatif axial en des déplacements linéaires identiques des organes intérieurs de commande des vannes V1 et V3. Les moteurs M2 et M4 présentent un arbre commun B relié de façon semblable aux vannes V2 et V4.

Les vannes V1 et V2 sont alimentées hydrauliquement par des circuits haute pression et basse pression référencés par P2 et R2. Les vannes V3 et V4 sont alimentées par des circuits haute pression et basse pression référencés par P1 et R1.

Selon la position de l'élément intérieur de la vanne V1 dans le corps de celle-ci :
- le canal T11 est en communication avec le circuit haute pression P2, tandis que le canal T12 est en communication avec le circuit basse pression R2 ;
- le canal T11 est en communication avec le circuit basse pression R2, tandis que le canal T12 est en communication avec le circuit haute pression P2 ;
- les canaux T11 et T12 sont isolés des alimentations basse pression et haute pression de la vanne V1 (position représentée sur les figures pour l'organe interne de commande de la vanne V1), le fluide hydraulique ne circulant alors pas dans lesdits canaux.

Le fonctionnement des vannes V2 à V4 est similaire.

Chaque moteur M1 à M4 est commandé par une unité électronique de gestion référencée respectivement par U1 à U4 avec laquelle il constitue une unité motrice au sens de l'invention.

Ces unités U1 à U4 dialoguent ensemble. Elles reçoivent d'une unité de pilotage U des ordres relatifs aux déplacements du vérin 1 commandés par le pilote de l'aéronef.

Ces unités de gestion U1 à U4 reçoivent également des informations relatives au déplacement effectif de la tige 4 du vérin 1 par rapport à son corps 3, que leur transmettent des capteurs de déplacement, référencés respectivement de C1 à C4. Ces quatre capteurs de déplacement C1 à C4 sont montés sur une même bielle reliée à la tige 4. Un capteur de surcharge monté sur le vérin 1 et référencé par 14 sur les figures, est relié aux unités U1 à U4.

Les circuits haute et basse pression P1, R1, P2 et R2 sont également utilisés pour commander, par l'intermédiaire de quatre électrovannes S11, S12, S31 et S32, la position de l'organe interne de commande de la vanne de sélection 13 par rapport au corps de celle-ci.

L'électrovanne S11 est une vanne trois voies qui met en communication un conduit la reliant à l'électrovanne S31 avec soit le circuit haute pression P1, soit le circuit basse pression R1. L'électrovanne S31 est une vanne trois voies qui met en communication l'une des chambres hydrauliques commandant la vanne de sélection 13 soit avec le conduit précité la reliant à l'électrovanne S11, soit avec le circuit basse pression R1. La vanne de sélection 13 comporte une autre chambre hydraulique qui est alimentée par le circuit haute pression P1.

Les électrovannes S12 et S32 commandent de façon similaire la communication entre les circuits basse pression et haute pression P2 et R2, et deux autres chambres de la vanne de sélection 13.

Les électrovannes S11 et S12 sont commandées par l'unité U1 ; les électrovannes S31 et S32 sont commandées par l'unité U3.

Les unités U1 à U4 sont associées à des moyens pour leur permettre de détecter, en fonction des différentes informations qu'elles reçoivent, les défaillances que peuvent connaître les divers éléments qui constituent le dispositif de servocommande.

En particulier, les unités U1 à U4 sont couplées à des capteurs de déplacement D1 à D4, leur donnant des indications quant à la position des organes internes de commande des vannes de distribution V1 à V4 par rapport aux corps de celles-ci. Ces capteurs sont constitués par des éléments formant noyau ferromagnétique terminant les éléments intérieurs des vannes de distribution V1 à V4, ainsi que par des moyens formant bobinage détectant les déplacements de ces éléments formant noyau.

La défaillance électrique de l'un des moteurs M1 à M4 ou de la liaison électrique entre un tel moteur M1 à M4 et l'unité U1 à U4 qui le commande, est détectée par comparaison de l'ordre fourni par l'unité U1 à U4 correspondante à ce moteur M1 à M4 et des informations relevées par le capteur D1 à D4 de la vanne V1 à V4 correspondante.

La défaillance de la liaison mécanique entre l'un des moteurs M1 à M4 et la vanne V1 à V4 correspondante est détectée par comparaison des informations relevées par le capteur D1 avec celles relevées par le capteur D3 (dans le cas des moteurs M1 et M3) , ainsi que par comparaison des informations relevées par les moyens D2 avec les informations relevées par les moyens D4 (dans le cas des moteurs M2 à M4).

La défaillance de fonctionnement d'une vanne V1 à V3 est détectée en comparant les informations relevées par le capteur de détection D1 à D3 correspondant :
- d'une part, à celles relevées par le capteur de détection D2 à D4 de la vanne V2 à V4, et
- d'autre part, à une estimation calculée par l'unité U1 à U3 du déplacement qu'aurait dû subir l'élément intérieur de ladite vanne V1 à V3.

La détection d'une défaillance d'une unité U1 à U4 ou de la boucle de détection de la vanne V1 à V4 qu'elle commande est réalisée par comparaison des ordres générés par chacune des unités U1 à U4. Lorsqu'une différence significative entre ces différents ordres est relevée, l'unité qui diffère est considérée comme défaillante.

La défaillance de la vanne de sélection 13 est assimilée à celle, soit des électrovannes S11 et S12 commandées par l'unité U1, soit des électrovannes S31 et S32 commandées par l'unité U3. Les défaillances de ces électrovannes se détectent à partir de mesures des intensités des courants qui les commandent.

En fonctionnement normal (figure 1), seules les unités U1 et U2 sont opérationnelles et actionnent leurs moteurs respectifs M1 et M2. Les électrovannes S11 et S12 sont mises sous tension de sorte que deux des chambres de commande de la vanne de sélection 13 sont en communication respectivement avec les circuits basse pression R1 et R2, les chambres opposées étant en communication avec les circuits haute pression P1 et P2. La vanne de sélection 13 met alors en communication, d'une part, les canaux 9a et 10a avec les canaux T11 et T12 et, d'autre part, les canaux 9b et 10b avec les canaux T31 et T32.

Les unités de gestion U3 et U4 sont dans des états d'attente et ne sollicitent pas les moteurs M3 et M4 qu'elles commandent. Les unités motrices que constituent ces unités U3 et U4 et les moteurs M3 et M4 sont passives.

Ainsi, le déplacement des pistons 6a et 6b dans leurs chambres 5a et 5b est commandé par le premier ensemble d'actionnement que constituent les canaux T11 et T12, les canaux T31 et T32, les vannes V1 et V3, l'arbre A, les moteurs M1 et M3, les unités de gestion U1 et U3. C'est ce premier ensemble d'actionnement qui est actif.

Le mouvement de l'arbre B commandé au moteur M2 par l'unité U2 n'est quant à lui pas répercuté sur le vérin 1, puisque les canaux T21 et T22, d'une part, et T41 et T42, d'autre part, sont obturés par la vanne de sélection 13. L'ensemble d'actionnement que définissent les canaux T21, T22, T41, T42, les vannes de distribution V2 et V4, l'arbre B, les moteurs M2 et M4, les unités de gestion U2 et U4, est en réserve.

Si l'une des défaillances qui ont été précédemment exposées est détectée sur l'unité active U1 ou l'un des éléments qu'elle commande, ladite unité U1 interrompt alors ces ordres au moteur M1. Les électrovannes S11, S12 sont désactivées de sorte que toutes les chambres de commande de la vanne de sélection 13 sont en communication avec soit le circuit haute pression P1, soit le circuit haute pression P2. La vanne de sélection passe alors dans son autre état (figure 2), c'est-à-dire dans son état où ce sont les canaux T21 et T22, d'une part, et T41 et T42, d'autre part, qui sont en communication avec les canaux d'alimentation/évacuation 9a et 10a, d'une part, et 9b et 10b, d'autre part. L'unité 3 devient opérationnelle.

Ainsi, le mouvement de la tige 4 est commandé par l'unité 2 qui actionne l'arbre B. L'unité 3 et le moteur M3 constituent une unité motrice opérationnelle et en réserve.

On notera que si l'une des opérations qui viennent d'être décrites n'intervient pas, le dispositif de servocommande continue à fonctionner convenablement puisque :
- le fait que l'unité 1 ne se coupe pas n'empêche pas l'unité 2 de commander le vérin 1, les canaux T11 et T12, ainsi que les canaux T31 et T32 étant fermés par la vanne de sélection 13 ;
- le fait que l'unité 3 ne fonctionne pas n'empêche pas non plus l'unité 2 de commander le vérin 1 ;
- et au cas où la vanne de sélection 13 reste dans son état initial, c'est l'unité U3 qui commandera le déplacement de la tige 4 par rapport au corps 3.

Dans le cas où, lorsque l'unité U2 (resp. U3) est active, une défaillance de l'un des éléments commandés par cette unité est détectée, le dispositif de servocommande bascule, de la même façon que précédemment sur un fonctionnement commandé par l'unité U3 (resp.U4).

L'hélicoptère peut donc faire face à trois défaillances successives. C'est uniquement dans le cas de quatre défaillances successives qu'il y a un risque de non fonctionnement, ce qui correspond à une probabilité inférieure à 10⁻⁹ par heure de vol.

On notera également qu'un autre avantage important d'un tel dispositif de servocommande tient en ce qu'il peut être facilement contrôlé au sol, sans qu'il ne soit nécessaire de mettre sous pression les circuits P1 et P2.

En particulier, il est possible de contrôler :
- les électrovannes S11, S12, S31 et S32 par passage de courant dans celles-ci ;
- le fonctionnement des moyens de détection D1 à D4, le fonctionnement des vannes V1 à V4, la liaison mécanique entre les moteurs M1 à M4 et les vannes V1 à V4, les circuits électriques de commande des moteurs M1 à M4, le fonctionnement des unités U1 à U4, en faisant mettre en oeuvre par les unités U1 à U4 les différents tests de défaillance qui ont été précédemment décrits ;
- le capteur de surcharge en vérifiant, en l'absence de circuit hydraulique, le signal de surcharge indiqué au pilote.

Une fois ces vérifications effectuées, on pourra également vérifier le fonctionnement de la vanne de sélection 13 en mettant l'un des circuits hydrauliques P1 et P2 sous pression de 50 à 200 bars et en faisant fonctionner successivement chacune des unités U1 à U4. La vanne de sélection 13 doit alors passer d'un état à un autre lorsqu'elle est commandée par les électrovannes S11 et S12 associées à l'unité U1 ou lorsqu'elle est commandée par les électrovannes S31 ou S32 commandées par l'unité U3.

L'invention a été décrite dans le cas particulier d'un dispositif de servocommande contrôlant l'orientation en pas d'une pale de rotor principal d'hélicoptère, mais s'applique, bien entendu, au contrôle de tout organe de commande de vol d'aéronef : contrôle du pas des pales d'un rotor de queue d'hélicoptère, contrôle de l'orientation de volets ou de gouvernes d'avion, etc.

Egalement, dans une variante avantageuse de l'invention, le dispositif comprend des moyens permettant au pilote de reprendre le contrôle mécanique direct du mouvement de la pale.

## Revendications

1. Dispositif de servocommande pour l'actionnement d'un organe de commande de vol d'un aéronef, comportant au moins un vérin hydraulique (1) monté entre cet organe et une autre partie de l'aéronef, ainsi que des moyens d'actionnement de ce vérin, ce vérin (1) hydraulique étant un vérin (1) double, ces moyens d'actionnement comportant un premier ensemble d'actionnement (U1,M1,V1,T11,T12; U3, M3,V3,T31,T32) comprenant deux circuits hydrauliques commandés chacun par une vanne de distribution à commande mécanique (V1,V3), ces deux vannes de distribution étant actionnées par des éléments mécaniques (A) communs entraînés en mouvement par des moyens moteurs (M1,M3), les moyens d'actionnement comportant des moyens de gestion (U1,U3) commandant ces moyens moteurs (M1,M3) en fonction de la position de l'organe de commande de vol et des ordres de pilotage qu'elle reçoit, caractérisé en ce qu'il comporte un-deuxième ensemble d'actionnement (U2,M2,V2, T21,T22; U4,M4,V4,T41,T42) du type précité dont les vannes de distribution sont actionnées en même temps que celles du premier ensemble et de façon similaire à celles-ci, et en ce qu'il comporte également des moyens (D1,D2,D3,D4) pour la détection de la défaillance d'au moins un élément de l'un ou l'autre desdits premier et deuxième ensembles d'actionnement, ainsi qu'une vanne de sélection (13), présentant deux états, cette vanne (13) mettant sélectivement en communication les circuits hydrauliques (T11,T12; T21,T22; T31,T32; T41,T42) du premier et du deuxième ensembles d'actionnement avec ceux du vérin, de sorte que dans un premier état de la vanne de sélection (13), le premier ensemble d'actionnement est actif et commande le vérin (1), le deuxième ensemble d'actionnement étant en réserve, et que dans un deuxième état de la vanne de sélection (13), les premier et deuxième ensembles d'actionnement sont respectivement en réserve et actif, le passage de ladite vanne de sélection (13) de l'un de ses états à l'autre étant commandé par les moyens de gestion (U1,U2,U3,U4) en fonction de la (ou des) défaillance(s) relevée(s) par les moyens de détection (D1,D2,D3,D4).

2. Dispositif selon la revendication 1, caractérisé en ce que le premier et le deuxième ensembles d'actionnement comportent chacun deux unités motrices (U1, M1; U3,M3) (U2,M2; U4,M4) susceptibles d'entraîner les éléments mécaniques communs (A, B) actionnant leurs vannes de distribution (V1,V2,V3,V4), les deux unités motrices d'un même ensemble d'actionnement étant en fonctionnement, l'une opérationnelle, l'autre passive, les moyens de gestion commandant, simultanément à la commande du passage de la vanne de sélection (13) d'un de ses états à un autre, le passage à l'état passif de l'unité motrice opérationnelle de celui des ensembles d'actionnement qui était actif et devient en réserve, ainsi que le passage de l'autre unité motrice de cet ensemble d'actionnement de l'état passif à l'état opérationnel.

3. Dispositif selon l'une des revendications 1 ou 2, caractérisé en ce que les moyens de détection (D1,D2, D3,D4)comportent des moyens pour détecter une défaillance de fonctionnement d'une vanne à commande mécanique.

4. Dispositif selon la revendication 3, caractérisé en ce que lesdits moyens comportent des moyens de comparaison du fonctionnement des deux vannes d'un même ensemble d'actionnement.

5. Dispositif selon l'une des revendications 1 à 4, caractérisé en ce que les moyens de détection (D1,D2, D3,D4) comportent des moyens pour détecter une défaillance des moyens moteurs ou de la liaison entre les moyens de gestion et lesdits moyens moteurs.

6. Dispositif selon la revendication 5, caractérisé en ce que lesdits moyens comportent des moyens de comparaison du fonctionnement des vannes actionnées par lesdits moyens moteurs et des ordres fournis à ceux-ci par lesdits moyens de gestion.

7. Dispositif selon l'une des revendications précédentes, caractérisé en ce que les moyens de détection (D1,D2,D3,D4) comportent des moyens pour détecter des défaillances des liaisons mécaniques entre les moyens moteurs et les vannes à commande mécanique.

8. Dispositif selon l'une des revendications précédentes, caractérisé en ce qu'il comporte des moyens pour détecter une défaillance du fonctionnement des moyens de gestion.

9. Dispositif selon l'une des revendications précédentes, caractérisé en ce qu'une vanne de distribution (V1,V2,V3,V4) à commande mécanique est une vanne de type tiroir, les moyens de détection comportant des moyens (D1,D2,D3,D4) pour détecter le déplacement de l'organe interne de ladite vanne dans le corps de celle-ci, ces derniers moyens comportant un noyau ferromagnétique porté par ledit organe interne, ainsi que des bobinages que ledit noyau traverse lorsque l'organe interne intérieur est en mouvement.

10. Utilisation d'un dispositif de servocommande selon l'une des revendications précédentes pour la commande de l'orientation en pas d'une pale de rotor d'aeronef, notamment d'hélicoptère.

## Claims

1. A servo-control system for actuating an aircraft flight control member, the system comprising at least one hydraulic actuator (1) mounted between said member and another portion of the aircraft, together with actuator means for actuating said actuator, said hydraulic actuator (1) being a duplicated actuator (1), said actuation means including a first actuation assembly (U1, M1, V1, T11, T12; U3, M3, V3, T31, T32) comprising two hydraulic circuits each controlled by a mechanically-controlled distributor valve (V1, V3), said two distributor valves being actuated by common mechanical elements (A) caused to move by motor means (M1, M3), the actuation means including control means (U1, U3) controlling said motor means (M1, M3) as a function of the position of the flight control member and of the piloting orders it receives, the system being characterized in that it includes a second actuation assembly (U2, M2, V2, T21, T22; U4, M4, V4, T41, T42) of the above-specified type in which the distributor valves are actuated simultaneously with those of the first assembly and in a manner similar thereto, and in that it also includes means (D1, D2, D3, D4) for detecting the failure of at least one element of one or the other of said first and second actuation assemblies, together with a selector valve (13) having two states, said selector valve (13) selectively putting the hydraulic circuits (T11, T12; T21, T22; T31, T32, T41, T42) of the first and second actuation assemblies into communication with the hydraulic circuits of the actuator, such that in a first state of the selector valve (13) the first actuation assembly is active and controls the actuator (1), the second actuation assembly being in reserve, and in a second state of the selector valve (13) the first and second actuation assemblies are respectively in reserve and active, said selector valve (13) being switched from one of its states to the other under the control of the control means (U1, U2, U3, U4) as a function of any failure(s) detected by the detection means (D1, D2, D3, D4).

2. A system according to claim 1, characterized in that each of the first and second actuation assemblies includes two drive units (U1, M1; U3, M3) (U2, M2; U4, M4) capable of driving the common mechanical elements (A, B) actuating their distributor valves (V1, V2, V3, V4); in operation, one of the two drive units in a single actuation assembly is operational while the other one is passive, the control means acting simultaneously with the selector valve (13) being caused to change over from one of its states to the other, to cause the operational drive unit in that one of the actuation assemblies that was active and that is being put into reserve to change over to the passive state, and also causing the other drive unit of said actuation assembly to change over from the passive state to the operational state.

3. A system according to claim 1 or 2, characterized in that the detection means (D1, D2, D3, D4) include means for detecting a failure to operate in a mechanically-controlled valve.

4. A system according to claim 3, characterized in that said means comprise means for comparing the operation of the two valves in the same actuation assembly.

5. A system according to any one of claims 1 to 4, characterized in that the detection means (D1, D2, D3, D4) include means for detecting a failure of the motor means or of the connection between the control means and said motor means.

6. A system according to claim 5, characterized in that said means include comparator means for comparing the operation of the valves actuated by said motor means with the orders delivered thereto by said control means.

7. A system according to any preceding claim, characterized in that the detection means (D1, D2, D3, D4) include means for detecting failures in the mechanical connections between the motor means and the mechanically-controlled valves.

8. A system according to any preceding claim, characterized in that it includes means for detecting a failure in the operation of the control means.

9. A system according to any preceding claim, characterized in that a mechanically-controlled distributor valve (V1, V2, V3, V4) is a valve of the slider type, the detector means including means (D1, D2, D3, D4) for detecting displacement of the internal member of said valve within the body thereof, the latter means including a ferromagnetic core carried by said internal member, associated with coils through which said core passes when the internal member moves.

10. A use of a servo-control system according to any preceding claim for controlling the pitch orientation of a blade of an aircraft rotor, in particular of a helicopter rotor.

## Patentansprüche

1. Servosteuervorrichtung zum Betätigen eines Flugsteuerorgans eines Luftfahrzeugs, welche mindestens einen hydraulischen Zylinder (1), der zwischen diesem Organ und einem anderen Teil des Luftfahrzeugs montiert ist, sowie eine Einrichtung zum Betätigen dieses Zylinders aufweist, wobei dieser hydraulische Zylinder (1) ein Doppelzylinder (1) ist und die Betätigungseinrichtung eine erste Betätigungsbaugruppe (U1,M1,V1, T11,T12; U3,M3,V3,T31,T32) aufweist, welche zwei hydraulische Kreise umfaßt, die jeweils durch ein Verteilventil mit mechanischer Steuerung (V1,V3) gesteuert werden, wobei diese zwei Verteilventile durch gemeinsame mechanische Elemente (A) betätigt werden, welche zu einer Bewegung durch Motormittel (M1,M3) angetrieben werden, wobei die Betätigungseinrichtung eine Steuereinrichtung (U1,U3) aufweist, welche diese Motormittel (M1,M3) in Abhängigkeit von der Stellung des Flugsteuerorgans und den Fluglageregelungsbefehlen ansteuert, die sie empfängt, dadurch gekennzeichnet, daß sie weiterhin eine zweite Betätigungsbaugruppe (U2,M2,V2,T21,T22; U4,M4,V4,T41,T42) der vorangehend genannten Art aufweist, deren Verteilventile gleichzeitig mit denjenigen der ersten Gruppe und in einer ähnlichen Weise wie diese betätigt werden, und daß sie weiterhin eine Einrichtung (D1,D2,D3,D4) zum Detektieren des Versagens von zumindest einem Element der ersten oder zweiten Betätigungsbaugruppe sowie ein Selektionsventil (13) aufweist, welches zwei Zustände besitzt, wobei dieses Ventil (13) wahlweise die hydraulischen Kreise (T11,T12; T21,T22; T31,T32; T41,T42) der ersten und der zweiten Betätigungsbaugruppe mit denjenigen des Zylinders verbindet, derart, daß in einem ersten Zustand des Selektionsventils (13) die erste Betätigungsbaugruppe aktiv ist und den Zylinder (1) steuert, während die zweite Betätigungsbaugruppe in Reserve steht, und daß in einem zweiten Zustand des Selektionsventils (13) entsprechend die erste und die zweite Betätigungsbaugruppe in Reserve stehen bzw. aktiv sind, wobei der Übergang des Selektionsventils (13) von einem seiner Zustände in den anderen durch die Steuereinrichtung (U1,U2,U3,U4) in Abhängigkeit von dem oder den Defekten gesteuert wird, welcher bzw. welche durch die Detektionseinrichtung (D1,D2,D3,D4) aufgedeckt wurde(n).

2. Vorrichtung nach Anspruch 1, dadurch gekennzeichnet, daß die erste und die zweite Betätigungsbaugruppe jeweils zwei Antriebseinheiten (U1,M1; U3,M3) (U2,M2; U4,M4) aufweisen, welche in der Lage sind, die gemeinsamen mechanischen Elemente (A, B) anzutreiben, welche ihre Verteilventile (V1,V2,V3,V4) betätigen, wobei von den zwei Antriebseinheiten einer und derselben Betätigungsbaugruppe im Betrieb die eine aktiv und die andere passiv ist und die Steuereinrichtung gleichzeitig mit der Steuerung des Übergangs des Selektionsventils (13) von einem seiner Zustände in einen anderen den Übergang der aktiven Antriebseinheit derjenigen Betätigungsbaugruppe, die aktiv war und in Reservestellung übergeht, in den passiven Zustand sowie den Übergang der anderen Antriebseinheit dieser Betätigungsbaugruppe von dem passiven Zustand in den aktiven Zustand veranlaßt.

3. Vorrichtung nach einem der Ansprüche 1 oder 2, dadurch gekennzeichnet, daß die Detektionseinrichtung (D1,D2,D3,D4) eine Einrichtung zum Detektieren eines Fehlers im Betrieb eines Ventils mit mechanischer Steuerung umfaßt.

4. Vorrichtung nach Anspruch 3, dadurch gekennzeichnet, daß die besagte Einrichtung eine Einrichtung zum Vergleich des Betriebs der zwei Ventile derselben Betätigungsbaugruppe aufweist.

5. Vorrichtung nach einem der Ansprüche 1 bis 4, dadurch gekennzeichnet, daß die Detektionseinrichtung (D1,D2,D3,D4) eine Einrichtung zum Detektieren eines Defekts der Motormittel oder der Verbindung zwischen der Steuereinrichtung und den Motormitteln aufweist.

6. Vorrichtung nach Anspruch 5, dadurch gekennzeichnet, daß die besagte Einrichtung eine Einrichtung zum Vergleichen des Betriebs der durch die Motormittel betätigten Ventile und der Befehle aufweist, welche diesen durch die Steuereinrichtung zugeführt werden.

7. Vorrichtung nach einem der vorangehenden Ansprüche, dadurch gekennzeichnet, daß die Detektionseinrichtung (D1,D2,D3,D4) eine Einrichtung zum Detektieren von Defekten der mechanischen Verbindungen zwischen den Antriebsmitteln und den Ventilen mit mechanischer Steuerung aufweist.

8. Vorrichtung nach einem der vorangehenden Ansprüche, dadurch gekennzeichnet, daß sie eine Einrichtung zum Detektieren eines Fehlers im Betrieb der Steuermittel aufweist.

9. Vorrichtung nach einem der vorangehenden Ansprüche, dadurch gekennzeichnet, daß ein Verteilventil (V1,V2,V3,V4) mit mechanischer Steuerung ein Ventil von der Art eines Absperrschiebers ist, wobei die Detektionseinrichtung eine Einrichtung (D1,D2,D3,D4) zum Detektieren der Verlagerung des inneren Elements dieses Ventils in dem Körper desselben aufweist und diese letztere Einrichtung einen ferromagnetischen Kern, der von dem besagten inneren Element getragen wird, sowie Wicklungen aufweist, welche dieser Kern durchläuft, wenn das innere Element sich in Bewegung befindet.

10. Verwendung einer Servosteuervorrichtung nach einem der vorangehenden Ansprüche zum Steuern der Orientierung der Steigung eines Rotorblatts eines Luftfahrzeuges, insbesondere eines Hubschraubers.
